# EUROPEAN PATENT APPLICATION

(11) **EP 4 468 464 A1**
(43) Date of publication of application: **27.11.2024**
(21) Application number: 23907543.5
(22) Date of filing: 11.12.2023
(51) Int. Cl.: H01M 10/6557, H01M 10/613, H01M 10/625, H01M 10/643, H01M 50/249

(54) **BATTERY MODULE, AND BATTERY PACK AND VEHICLE COMPRISING SAME BATTERY MODULE**

(30) Priority: 19.12.2022 KR 20220178315; 05.09.2023 KR 20230117975; 05.12.2023 KR 20230174953
(71) Applicant: LG Energy Solution, Ltd., Seoul 07335 (KR)
(72) Inventor: JUNG, In-Hyuk, Daejeon 34122 (KR); YANG, Jin-Oh, Daejeon 34122 (KR); OH, Kwang-Keun, Daejeon 34122 (KR); CHOI, Hae-Won, Daejeon 34122 (KR)
(74) Representative: Goddar, Heinz J.
(86) International application number: PCT/KR2023/020350
(87) International publication number: WO 2024/136257

(57) **Abstract**

A battery module according to an embodiment of the present disclosure includes a plurality of battery cells; and a cooling tube provided between the plurality of battery cells and having a cell attachment surface attached to the plurality of battery cells, wherein a cooling channel through which a cooling medium for cooling the plurality of battery cells flows and which has a width of 1.7 mm to 1.8 mm in the stacking direction of the battery cells is formed inside the cooling tube.

## Description

### TECHNICAL FIELD

The present disclosure relates to a battery module, and a battery pack and vehicle including the same, and more specifically, to a battery module with improved cooling efficiency, and a battery pack and vehicle including the same.

The present application claims priority to Korean Patent Application No. 10-2022-0178315 filed on December 19, 2022, Korean Patent Application No. 10-2023-0117975 filed on September 5, 2023, and Korean Patent Application No. 10-2023-0174953 filed on December 5, 2023 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when configuring a battery pack by connecting a plurality of battery cells in series/parallel, it is common to configure a battery module including at least one battery cell first, and to configure a battery pack by adding other components using the at least one battery module.

In the case of a conventional battery module, cooling tubes are provided between battery cells to cool the battery cells. For these cooling tubes, it is important to secure heat transfer performance and minimize pressure loss to increase cooling efficiency.

Therefore, there is a need to find a way to provide a battery module having a cooling tube that can secure heat transfer performance and minimize pressure loss.

### DISCLOSURE

### Technical Problem

The present disclosure is designed to solve the problems of the related art, and therefore the present disclosure is directed to providing a battery module having a cooling tube that can secure heat transfer performance and minimize pressure loss, and a battery pack and vehicle including the same.

However, technical problems to be solved by the present disclosure are not limited to the above-described problems, and other problems not mentioned herein may be clearly understood by those skilled in the art from the following description of the present disclosure.

### Technical Solution

To address the above-described object, the present disclosure provides a battery module including a plurality of battery cells; and a cooling tube provided between the plurality of battery cells and having a cell attachment surface attached to the plurality of battery cells, wherein a cooling channel through which a cooling medium for cooling the plurality of battery cells flows and which has a width of 1.7 mm to 1.8 mm in the stacking direction of the battery cells is formed inside the cooling tube.

In addition, preferably, the cell attachment surface may be provided as a flat surface and may be in close contact with the outer surface of the plurality of battery cells.

In addition, preferably, the cooling channel may have a width of 1.76 mm in the stacking direction of the battery cells.

In addition, preferably, the cooling tube may be formed so that convex portions and concave portions are provided alternately by pressurizing during the manufacturing of the cooling tube, and the cooling channel may be provided in a preset plural number where no deformation of the flat surface occurs during the pressurizing.

In addition, preferably, the cooling channel may include an inlet channel that guides the cooling medium supplied from an external cooling device; and an outlet channel that communicates with the inlet channel and guides the cooling medium flowing in the inlet channel to the external cooling device, wherein the outlet channel may be provided above the inlet channel in the height direction of the cooling tube.

In addition, preferably, the cooling channels may be provided with 10 channels and may be disposed to be spaced apart from each other at a predetermined distance along the height direction of the cooling tube.

In addition, preferably, the inlet channels and the outlet channels may be provided with 5 channels each, and each inlet channel and each outlet channel may be disposed to be spaced apart at predetermined intervals in the height direction of the cooling tube.

In addition, preferably, the predetermined interval may be 0.3 mm to 0.9 mm in the height direction of the cooling tube.

In addition, preferably, the predetermined interval may be 0.34 mm in the height direction of the cooling tube.

In addition, preferably, the cooling channel may have a round end in the height direction of the cooling tube.

And, the present disclosure provides a battery pack including at least one battery module according to embodiments described above; and a pack case accommodating the at least one battery module.

In addition, the present disclosure provides a vehicle including at least one battery pack according to an embodiment described above.

### Advantageous Effects

According to the various embodiments described above, it is possible to provide a battery module having a cooling tube that can secure heat transfer performance and minimize pressure loss, and a battery pack and vehicle including the same.

In addition, according to various embodiments of the present disclosure, various other additional effects may be achieved. These various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic view for describing a battery module according to an embodiment of the present disclosure.
FIG. 2 is a view for describing a cooling tube according to an embodiment of the present disclosure.
FIG. 3 is a front view of a cooling tube according to an embodiment of the present disclosure.
FIG. 4 is a side cross-sectional view of a cooling tube according to an embodiment of the present disclosure.
FIG. 5 is a view for describing a manufacturing process through a press process of a cooling tube according to an embodiment of the present disclosure.
FIG. 6 is a view for describing a cross-sectional shape of cooling channels after a press process according to the number of cooling channels of a cooling tube according to an embodiment of the present disclosure.
FIGS. 7 and 8 are views for describing the differential pressure per unit length according to the number of cooling channels of a cooling tube according to an embodiment of the present disclosure.
FIGS. 9 and 10 are views for describing the expected differential pressure according to the battery module configuration according to an embodiment of the present disclosure.
FIG. 11 is a schematic view for describing cooling channels of a cooling tube according to an embodiment of the present disclosure.
FIG. 12 is a view for describing the number of channels and shape information of cooling channels of the cooling tube of FIG. 11.
FIG. 13 is a view for describing a simulation result according to the number of channels and shape of cooling channels according to an embodiment of the present disclosure.
FIG. 14 is a view for describing an influence analysis based on the simulation result of FIG. 13.
FIG. 15 is a schematic plan view of a battery module for describing the arrangement of cooling tubes of a battery module according to an embodiment of the present disclosure.
FIG. 16 is an enlarged view of part E of FIG. 15.
FIG. 17 is a schematic side cross-sectional view of a battery module for describing the arrangement of cooling tubes in the height direction of a battery module according to an embodiment of the present disclosure.
FIG. 18 is an enlarged view of part F of FIG. 17.
FIGS. 19 and 20 are views for describing a contact state between a cooling tube and a battery cell when cooling channels of the cooling tube according to an embodiment of the present disclosure are deformed.
FIG. 21 is a view for describing a battery pack according to an embodiment of the present disclosure.
FIG. 22 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, the terms indicating directions as used herein such as upper, lower, left, right, front, and rear are used for convenience of description only, and it is obvious to those skilled in the art that the term may change depending on the position of the stated element or an observer.

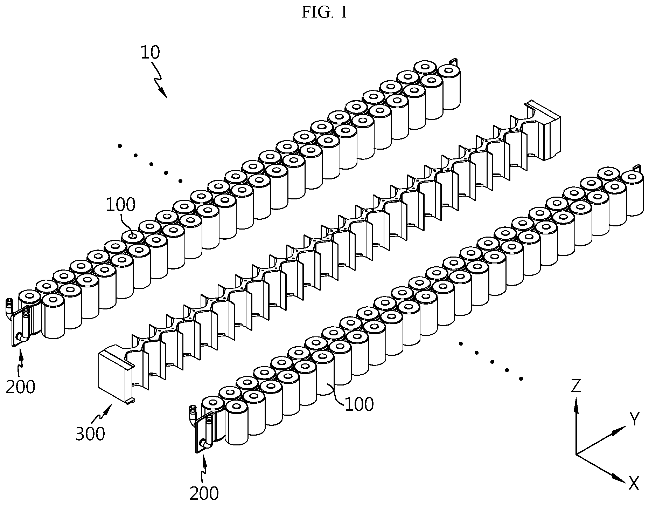

FIG. 1 is a schematic view for describing a battery module according to an embodiment of the present disclosure.

Referring to FIG. 1, the battery module 10 may include battery cells 100 and cooling tubes 200.

The battery cells 100 may be provided in plurality. The plurality of battery cells 100 are secondary batteries and may be provided as cylindrical secondary batteries, pouch-type secondary batteries, or prismatic secondary batteries. Hereinafter, in an embodiment of the present disclosure, the description will be limited to the case that the plurality of battery cells 100 are cylindrical secondary batteries.

The cooling tube 200 is provided between the plurality of battery cells 100 and may be attached to the plurality of battery cells 100 to increase cooling performance. Accordingly, the cooling tube 200 may have a cell attachment surface attached to the plurality of battery cells 100 on the outer surface thereof.

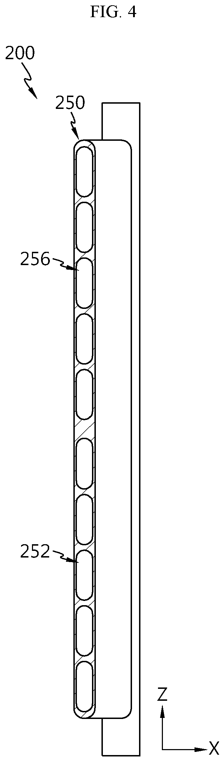

In the cooling tube 200, a cooling channel 250 (see FIG. 4) to be described later may be formed for the flow of a cooling medium. In an embodiment of the present disclosure, the cooling medium is a liquid and may be provided as water. Without being limited thereto, the cooling medium may include not only water but also one or more fluids capable of exchanging heat with the surrounding environment. The cell attachment surface of the cooling channel 250 (see FIG. 4) may be provided as a flat surface to secure the contact area with the battery cells 100 to the maximum extent.

The cooling tube 200 may be provided to have a curvature in the longitudinal direction (Y-axis direction) to increase cooling performance with the battery cells 100 provided as the cylindrical secondary batteries. This is to increase cooling performance by further securing a contact area between the outer surface 105 of the battery cells 100 provided in a cylindrical shape and the cooling tube 200. However, in the cooling channel 250 provided within the cooling tube 200, a deformation such as a curved shape may occur on the cell attachment surface of the cooling tube 200 due to a press process to be described later. When a deformation such as bending occurs on the cell attachment surface in contact with the outer surface of the battery cells 100, the flatness of the cell attachment surface is lowered, and the adhesion between the outer surface of the cooling tube 200 and the battery cell 100 decreases, thereby reducing the contact area. As a result, the heat transfer area may be reduced, and thus the heat transfer performance of the cooling tube 200 may be degraded.

This curved shape due to the deformation of the cooling channel 250 may occur during a press process for forming the curvature of the cooling tube 200 to be described later.

In an embodiment of the present disclosure, the cell attachment surface may be secured as a flat surface even after the press process of the cooling tube 200, thereby reducing the risk of deformation of the cell attachment surface of the cooling tube 200 and significantly reducing the risk of heat transfer deviation inside the cooling channel 250 near the cell attachment surface. Therefore, in an embodiment of the present disclosure, it is possible to secure the heat transfer area to the maximum extent while increasing the adhesion of the battery cells 100 of the cooling tube 200, so that the deterioration of the heat transfer performance of the cooling tube 200 may be prevented.

Hereinafter, the cooling tube 200 related to the shape of the cooling channel 250 according to an embodiment of the present disclosure will be described in more detail.

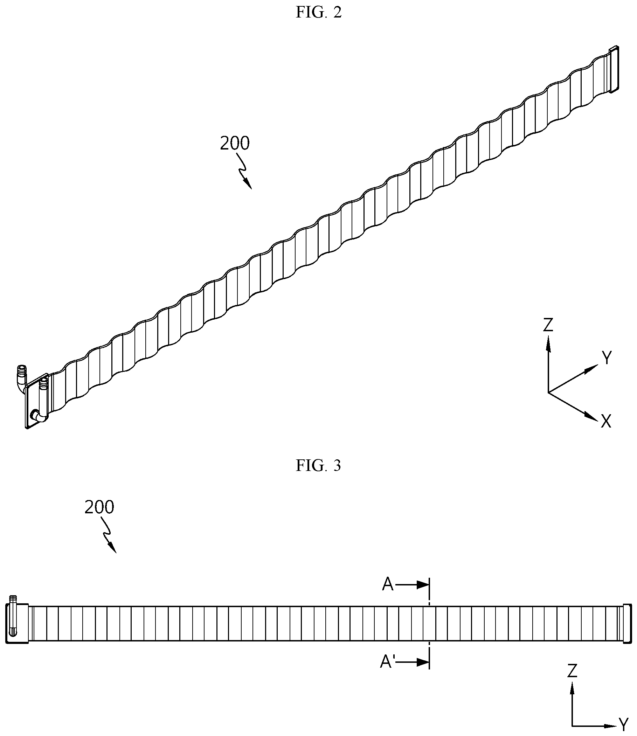

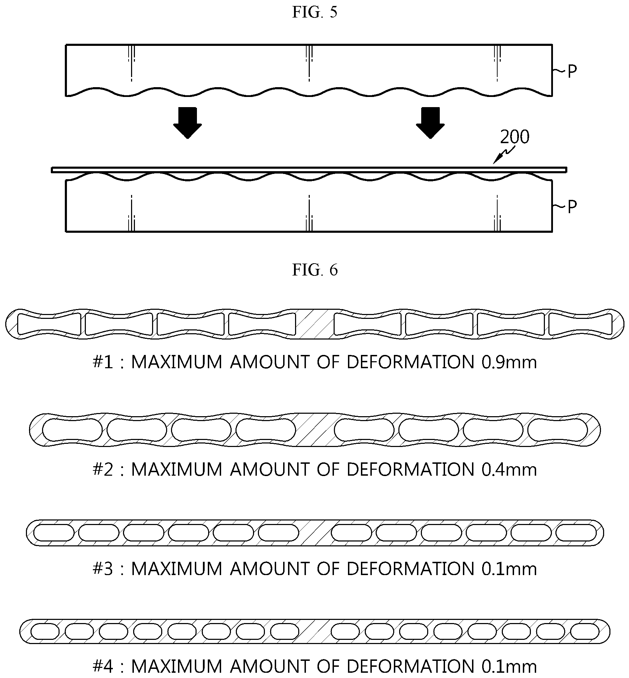

FIG. 2 is a view for describing a cooling tube according to an embodiment of the present disclosure, FIG. 3 is a front view of a cooling tube according to an embodiment of the present disclosure, FIG. 4 is a side cross-sectional view of a cooling tube according to an embodiment of the present disclosure, and FIG. 5 is a view for describing a manufacturing process through a press process of a cooling tube according to an embodiment of the present disclosure.

Referring to FIGS. 2 to 5, the cooling tube 200 may be made of a material having high thermal conductivity. For example, the cooling tube 200 may be made of aluminum.

The cooling tube 200 is formed to have a predetermined length and may have a curvature shape in the longitudinal direction (Y-axis direction). The curvature shape may be a shape provided by an alternating arrangement of convex portions and concave portions in the longitudinal direction (Y-axis direction). The alternating arrangement of convex portions and concave portions may mean that one concave portion is disposed between two convex portions and one convex portion is disposed between two concave portions. The plurality of battery cells 100 may be disposed in two rows with the cooling tube 200 interposed therebetween in the longitudinal direction and may be disposed to be attached to the convex portions and the concave portions.

The cooling tube 200 may have this curvature shape by pressurizing of the press device P during the manufacturing of the cooling tube 200. That is, it may be manufactured so that convex portions and concave portions are provided alternately by pressurizing of the press device P.

The cooling channels 250 may be provided in a preset plural number where no deformation of the cooling channels 250 occurs during the pressurizing. The number of cooling channels 250 is an important design factor related to the deformation of the cooling channels 250 during the pressurizing. In the cooling tube 200, as the number of cooling channels 250 increases, the deformation of the cooling channels 250 during the pressurizing may be reduced. However, as the number of cooling channels 250 increases, there is a problem that the pressure loss of the cooling tube 200 also increases. When the pressure loss of the cooling tube 200 is large, the output of the pump for circulating the cooling medium toward the cooling channel 250 should be increased, which increases power consumption, resulting in a problem of reducing the overall efficiency of the battery module 10.

Therefore, it is important that the number of cooling channels 250 in the cooling tube 200 is provided at a preset number that reduces the pressure loss and causes no deformation of the cooling channels 250 during the press process. In an embodiment of the present disclosure, the cooling channels 250 are provided with 10 channels and may be disposed to be spaced apart from each other at a predetermined distance along the height direction of the cooling tube 200.

The cooling channel 250 may include an inlet channel 252 and an outlet channel 256.

The inlet channel 252 may guide the cooling medium supplied from an external cooling device toward the cooling tube 200. The inlet channel 252 may be disposed at the lower part of the cooling tube 200 based on the central axis of the cooling tube 200 in the height direction (Z-axis direction) of the cooling tube 200. The inlet channel 252 is formed to be long along the longitudinal direction (Y-axis direction) of the cooling tube 200 and may allow the cooling medium to flow along the longitudinal direction (Y-axis direction) in the lower part of the cooling tube 200.

The inlet channels 252 may be provided in a preset number. In this embodiment, the inlet channels 252 may be provided in plurality, and specifically, 5 inlet channels 252 may be provided. The number of inlet channels 252 may be a number that considers both reducing pressure loss and causing no deformation during the press process described above. The plurality of inlet channels 252 may be disposed to be spaced apart from each other at a predetermined distance along the height direction (Z-axis direction) of the cooling tube 200.

The outlet channel 256 communicates with the inlet channel 252 and may guide the cooling medium flowing in the inlet channel 252 to the external cooling device. The outlet channel 256 may be disposed at the upper part of the cooling tube 200 based on the central axis of the cooling tube 200 in the height direction (Z-axis direction) of the cooling tube 200. Specifically, the outlet channel 256 may be provided above the inlet channel 252 in the height direction (Z-axis direction) of the cooling tube 200. The outlet channel 256 is formed to be long along the longitudinal direction (Y-axis direction) of the cooling tube 200 and may allow the cooling medium to flow along the longitudinal direction (Y-axis direction) in the upper part of the cooling tube 200.

The outlet channels 256 may be provided in a preset number. In this embodiment, the outlet channels 256 may be provided in plurality, and specifically, 5 outlet channels 256 may be provided. The number of outlet channels 256 may be a number that considers both reducing pressure loss and causing no deformation during the press process described above. The plurality of outlet channels 256 may be disposed to be spaced apart from each other at a predetermined distance along the height direction (Z-axis direction) of the cooling tube 200. Eventually, each inlet channel 252 and each outlet channel 256 may be disposed to be spaced apart at predetermined intervals in the height direction (Z-axis direction) of the cooling tube 200.

Meanwhile, the cooling medium may enter the inlet channel 252 through a port connected to the external cooling device of the cooling tube 200, flow along the longitudinal direction of the inlet channel 252, move toward the outlet channel 256 on the opposite side of the port, flow along the longitudinal direction of the outlet channel 256, and then move back toward the external cooling device through the port. The flow path of the cooling medium may be approximately U-shaped.

Hereinafter, test results related to the deformation of the cooling channels 250 during the press process associated with the number of cooling channels 250 of the cooling tube 200 will be examined.

FIG. 6 is a view for describing a cross-sectional shape of cooling channels after a press process according to the number of cooling channels of a cooling tube according to an embodiment of the present disclosure.

Referring to FIG. 6 and the preceding FIGS. 1 to 5, it can be seen that the maximum amount of deformation of the cooling channels 250 decreases as moving from Case 1 to Case 4, in other words, as the number of cooling channels 250 in the cooling tube 200 increases. Specifically, it can be seen that when the total number of cooling channels 250 is 8 (specifically, 4 inlet channels and 4 outlet channels are provided each) as in Case 1 and Case 2, the maximum deformation amount of the cooling channels 250 is greater than that in Case 3 and Case 4, which are provided with larger number of cooling channels 250 than Case 1 and Case 2. On the other hand, when comparing Case 1 and Case 2, it can be seen that even when the number of cooling channels 250 is the same, a difference in the maximum amount of deformation occurs depending on the interval between each cooling channel 250.

And, when comparing Case 3 and Case 4, it can be seen that the maximum deformation amount of the cooling channels 250 in Case 3 (configuration of 12 cooling channels provided with 6 inlet channels and 6 outlet channels, respectively) and in Case 4 (configuration of 16 cooling channels provided with 8 inlet channels and 8 outlet channels, respectively) is the same. In this case, it may be preferable to configure the cooling channels as in Case 3 rather than Case 4 to reduce pressure loss. In this way, the number of cooling channels 250 may be provided to a preset number that reduces pressure loss and causes no deformation.

In the case of the cooling channel 250 according to an embodiment of the present disclosure, in consideration of this, a total of 10 channels including 5 inlet channels 252 and 5 outlet channels 256 may be provided as seen previously.

Meanwhile, with regard to the deformation of the cooling channel, the press speed during the press process did not have a significant effect even if the speed was different. That is, with regard to the flatness of the cell attachment surface of the cooling channel, the press speed during the press process has a small effect on the flatness.

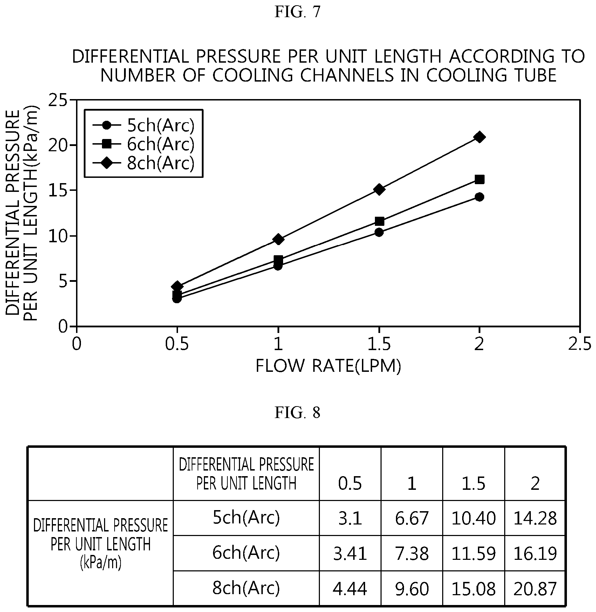

FIGS. 7 and 8 are views for describing the differential pressure per unit length according to the number of cooling channels of a cooling tube according to an embodiment of the present disclosure.

Referring to FIGS. 7 and 8, the results of the differential pressure per unit length of the cooling tube according to the number of channels of the cooling tube are shown. It can be seen that the differential pressure per unit length increases as the flow rate increases, and the differential pressure increases as the number of cooling channels increases. The test results show that when the cooling channels are composed of 8 channels, the pressure loss increases by approximately 45% compared to when the cooling channels are composed of 5 channels.

On the other hand, the number of channels of 5 channels, 6 channels, and 8 channels in the test may mean the number of each inlet channel and outlet channel, rather than the total number of cooling channels. That is, in the case of 5 channels, it may mean that the cooling tube is composed of 5 inlet channels and 5 outlet channels each, making a total of 10 cooling channels. Likewise, in the case of 8 channels, it may mean that a total of 16 cooling channels are configured. Eventually, the test results show that reducing the number of cooling channels in the cooling tube may reduce pressure loss.

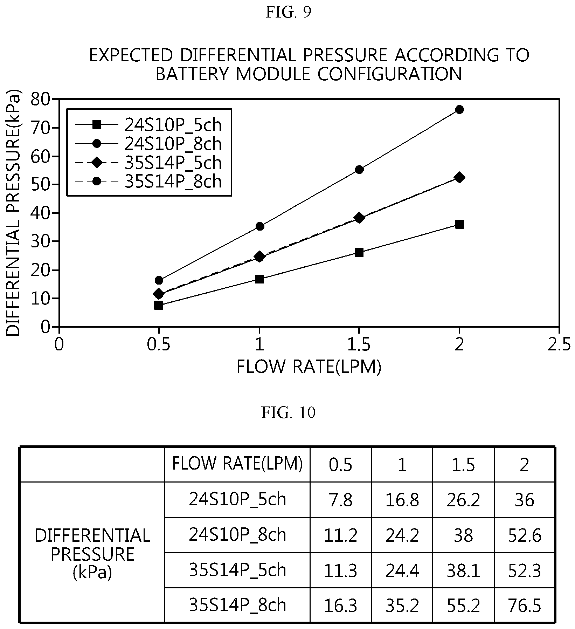

FIGS. 9 and 10 are views for describing the expected differential pressure according to the battery module configuration according to an embodiment of the present disclosure.

Referring to FIGS. 9 and 10, the results of the expected differential pressure according to the battery module configuration are shown. It can be seen that the differential pressure increases as the flow rate increases, and the differential pressure increases as the number of battery cells increases. Meanwhile, in FIGS. 9 and 10, only the flow path length of the cooling channel in the cooling tube is reflected, and the port and end plate part connected to the external cooling device are not reflected. Accordingly, for example, in the case of a 24S10P module, the flow path length may be approximately 2520.4 mm (= 2 * 1260.2 mm), and in the case of a 35S14P module, the flow path length may be approximately 3663.3 mm (= 2 * 1831.7 mm).

The test results show that the differential pressure of the 8-channel configuration of the 24S10P module and the 5-channel configuration of the 35S14P module is almost the same. That is, when the cooling channel in the cooling tube is configured with 5 channels (5 channels each for the inlet channel and the outlet channel, 10 channels in total), more battery cells may be attached to the cooling tube. In other words, the cooling tube may be made longer, approximately 45% longer.

As such, when the number of cooling channels in the cooling tube is configured with 5 channels each for the inlet channel and the outlet channel, it is possible to design a cooling tube to which more battery cells may be attached while promoting a relatively free configuration of a battery module.

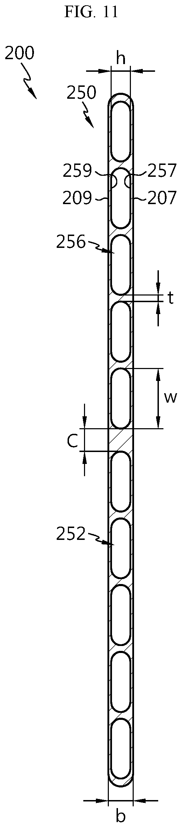

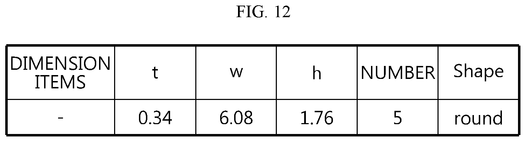

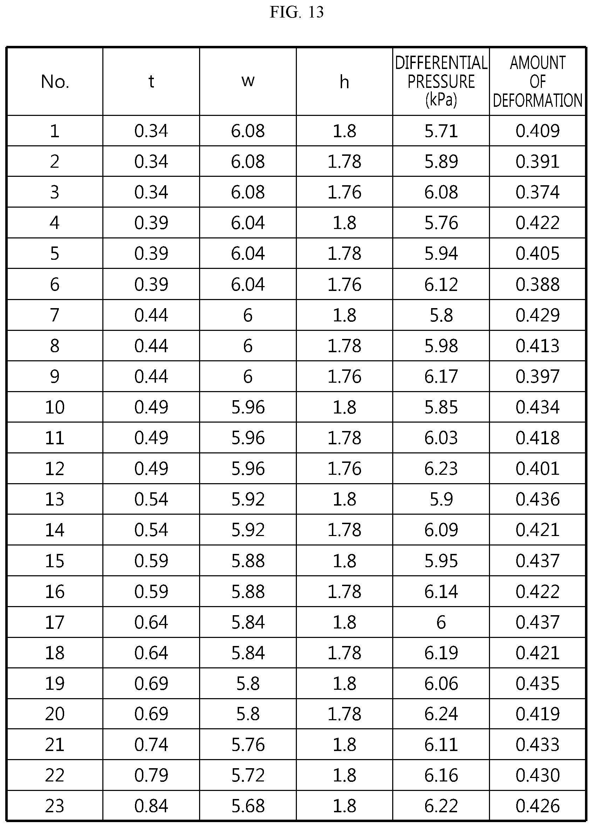

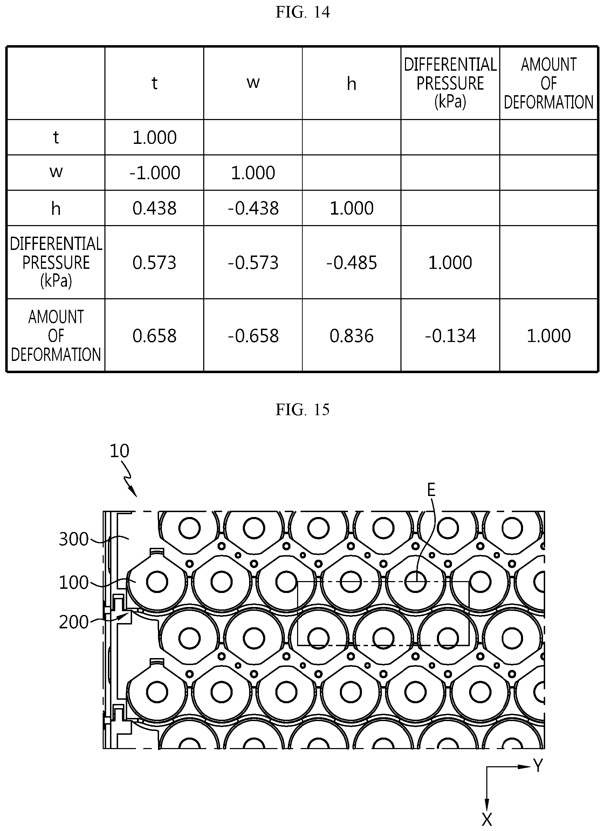

FIG. 11 is a schematic view for describing cooling channels of a cooling tube according to an embodiment of the present disclosure, FIG. 12 is a view for describing the number of channels and shape information of cooling channels of the cooling tube of FIG. 11, FIG. 13 is a view for describing a simulation result according to the number of channels and shape of cooling channels according to an embodiment of the present disclosure, and FIG. 14 is a view for describing an influence analysis based on the simulation result of FIG. 13.

Referring to FIGS. 11 to 14, as seen previously, it is important that no deformation of the cell attachment surface 207 of the cooling channel 250 of the cooling tube 200 occurs during the above-described press process of the cooling tube 200. The deformation of the cell attachment surface 207 of the cooling tube 200 reduces the heat transfer area by reducing the contact area of the cell attachment surface 207 with the battery cells 100, thereby degrading the overall cooling performance, so that it is important to prevent this. Therefore, it is important to design the cell attachment surface 207 of the cooling tube 200 as a flat surface without deformation even in the press process.

During the press process (see FIG. 5), the cell attachment surface 207 may be concavely pressed and relatively compressed, resulting in less deformation, and the cell non-attachment surface 209 may be convexly pressed during the press process and relatively stretched compared to the cell attachment surface 207, resulting in further deformation. According to these concave and convex shapes, deformation of the cooling channel 250 provided in a hollow shape within the cooling tube 200 between the cell attachment surface 207 and the cell non-attachment surface 209 is highly likely to occur during the press process. Since the cooling tube 200 is provided with the cooling channel 250 in a hollow shape for an internal flow path, there is a high possibility that the cooling channel 250 in a hollow shape will be deformed during the press process.

When the cooling channel 250 is deformed, the outer surfaces 207, 209 of the cooling tube 200 outside the cooling channel 250 may also be deformed. For example, when the cooling channel 250 is deformed, such as being recessed to a predetermined depth, the outer surfaces 207, 209 of the cooling tube 200, that is, the cell attachment surface 207 and the cell non-attachment surface 209 of the cooling tube 200 may also be recessed to a predetermined depth by the amount of deformation of the cooling channel 250. Conversely, the inner surfaces 257, 259 of the cooling tube 200 may be deformed by the deformation of the cell attachment surface 207 and the cell non-attachment surface 209 during the press process.

Here, in particular, deformation of the cell attachment surface 207 may reduce the contact area with the battery cells 100, thereby lowering heat transfer performance, which may act as a factor of degrading cooling performance.

On the other hand, since the opposite surface 209 of the cell attachment surface 207 of the cooling tube 200 in the cooling channel 250 is irrelevant to the heat transfer performance, it is relatively unimportant whether the opposite surface 209 of the cell attachment surface 207 of the cooling tube 200 is deformed or not.

Therefore, it is necessary to design a cooling channel 250 that can minimize deformation of the cell attachment surface 207 in the cooling tube 200 and also reduce pressure loss.

First, as seen previously, the cooling channels 250 may be provided with 5 inlet channels 252 and 5 outlet channels 256, for a total of 10 cooling channels. And, in an embodiment of the present disclosure, the thickness b of the cooling tube 200 may be 2.5 mm. And, in the height direction of the cooling tube 200, the interval c between the inlet tube 252 and the outlet tube 256 that are disposed closest to each other may be 4 mm. In the above simulation, the thickness b of the cooling tube 200 and the interval c between the inlet tube 252 and the outlet tube 256 that are disposed closest to each other may be fixed dimensions. Meanwhile, the compression distance through the press process may be 6.44 mm (initially 2.50 mm), and the preset differential pressure tolerance may be approximately 6.25 kPa.

The dimension item t may mean a predetermined interval between the cooling channels 250 in the height direction of the cooling tube 200. Specifically, the dimension item t may mean a predetermined interval spaced apart from each other between the inlet channels 252 and a predetermined interval spaced apart from each other between the outlet channels 256 in the height direction of the cooling tube 200. The dimension item w may mean a length in the height direction of the cooling tube 200. Specifically, in the height direction of the cooling tube 200, it may be the length w of each inlet channel 252 and each outlet channel 256. The dimension item h may mean a width of the cooling channel 250 in the thickness b direction of the cooling tube 200. Specifically, it may be the width h of the cooling channel 250 in the stacking direction (X-axis direction) of the battery cells 100 (see FIG. 1).

Referring to FIG. 13, it can be seen that as the dimension item h (the width of the cooling channel 250 in the thickness b direction of the cooling tube 200) decreases, the amount of deformation decreases. For example, as shown in No. 1 to No. 3, it can be seen that as the dimension item h decreases to 1.8 mm, 1.78 mm, and 1.76 mm, the amount of deformation also decreases in the order of 0.409, 0.391, and 0.374. In addition, as shown in No. 4 to No. 6, it can be seen that as the dimension item h decreases to 1.8 mm, 1.78 mm, and 1.76 mm, the amount of deformation also decreases in the order of 0.422, 0.405, and 0.388. And, it can be seen that as the dimension item t (a predetermined interval spaced apart from each other between each inlet channel 252 and between each outlet channel 256 in the height direction of the cooling tube 200) increases, the amount of deformation increases. In addition, it can be seen that as the dimension item w (the length of each inlet channel 252 and each outlet channel 256 in the height direction of the cooling tube 200) decreases, the amount of deformation increases. Taken together, it can be seen that the result with the least amount of deformation within the differential pressure tolerance (6.25 kPa) is Case 3 based on the result of the simulation according to No. 3.

Referring to FIG. 14, the influence of these dimension items may be analyzed as follows. First, it means that the closer to 1 in the table, the higher the degree of influence between the two factors. It can be seen that the dimension item t (a predetermined interval between the cooling channels 250 in the height direction of the cooling tube 200) and the dimension item w (the length of each inlet channel 252 and each outlet channel 256 in the height direction of the cooling tube 200) have the same absolute value of the positive/negative difference between each other under conditions. This may mean that the absolute value of the influence is the same. As shown in the table, it can be seen that the factors mainly having a large influence on the difference in the amount of deformation are the dimension item t (a predetermined interval between the cooling channels 250 in the height direction of the cooling tube 200) and the dimension item h, and the dimension item h has a relatively higher influence than the dimension item t.

As such, the cooling channel 250 may preferably have a length w of 5.6 mm to 6.1 mm in the height direction of the cooling tube 200. Specifically, in the height direction of the cooling tube 200, each cooling tube 250 may have a length of 6.08 mm. More specifically, in the height direction of the cooling tube 200, the length w of each inlet channel 252 and each outlet channel 256 may be 6.08 mm.

In addition, the predetermined interval t between the cooling channels 250 in the height direction of the cooling tube 200 may be 0.3 mm to 0.9 mm. Specifically, the predetermined interval t may be 0.34 mm in the height direction of the cooling tube 200. More specifically, in the height direction of the cooling tube 200, the predetermined interval t between the inlet channels 252 and the predetermined interval t between the outlet channels 256 may be 0.34 mm.

And, the width h of the cooling channel 250 in the thickness b direction of the cooling tube 200 may be 1.7 mm to 1.8 mm. Specifically, in the stacking direction (X-axis direction) of the battery cells 100 (see FIG. 1), the width h of the cooling channel 250 may be 1.7 mm to 1.8 mm. More specifically, the width h of the cooling channel 250 may be 1.76 mm in the stacking direction of the battery cells 100.

In addition, the cooling channel 250 may have a round end in the height direction of the cooling tube 200.

In this way, as shown in FIG. 12, the cooling channel 250 according to an embodiment of the present disclosure may be formed to have a round end in the height direction of the cooling tube 200, an interval t of 0.34 mm between them in the height direction of the cooling tube 200, a length w of 6.08 mm in the height direction of the cooling tube 200, and a thickness h of 1.76 mm in the thickness direction b.

In an embodiment of the present disclosure, a cooling tube 200 that can minimize deformation of the cooling channel near the cell attachment surface and the cell attachment surface and also significantly reduce pressure loss at the same time may be provided through the cooling channel 250 provided in such shape, size, and number.

Therefore, in an embodiment of the present disclosure, the cooling tube 200 capable of securing heat transfer performance while minimizing the pressure loss may reduce the amount of energy consumed for cooling the battery cells 100, which may result in promoting more efficient operation of the entire system.

Referring to FIG. 1 again, the battery module 10 may include a side structure unit 300.

The side structure unit 300 supports the battery cells 100 and may secure the rigidity of the battery cells 100. This side structure unit 300 is formed to have a predetermined length along the longitudinal direction of the battery module 10, and may be provided in one or more pieces and assembled with each other to accommodate and support the battery cells 100.

The battery module 10 according to an embodiment of the present disclosure may form a cell array structure through the battery cells 100, the cooling tube 200, and the side structure unit 300. The side structure unit 300 constituting the cell array structure may guide the battery module 10 to be configured without omitting a separate cover structure such as a conventional module frame, and thus a so-called module frameless structure may be implemented, thereby making the battery module 10 slimmer and increasing its energy density.

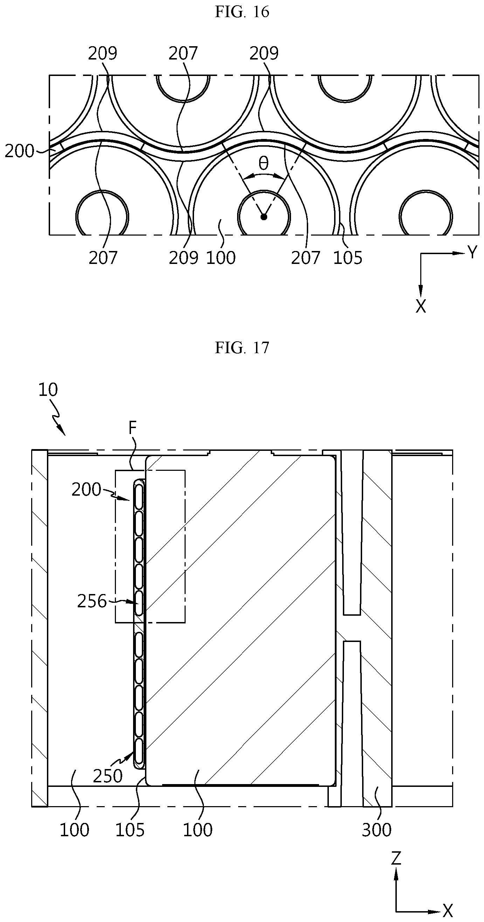

FIG. 15 is a schematic plan view of a battery module for describing the arrangement of cooling tubes of a battery module according to an embodiment of the present disclosure, and FIG. 16 is an enlarged view of part E of FIG. 15.

Referring to FIGS. 15 and 16, in the battery module 10, the cooling tubes 200 may be disposed between battery cells 100 arranged in two rows, respectively. Each cooling tube 200 may include a cell attachment surface 207 that is attached to the outer surface 105 of the battery cell 100 and is formed concavely, and a cell non-attachment surface 209 that is not attached to the outer surface of the battery cell 100 and is formed convexly.

The cell attachment surface 207 and the cell non-attachment surface 209 may be alternately formed along the longitudinal direction (Y-axis direction) of the cooling tube 200 based on one surface (+X-axis direction) or the other surface (-X-axis direction) of the cooling tube 200, and may be formed in a zigzag position along the longitudinal direction (Y-axis direction) of the cooling tube 200 based on both surfaces (X-axis direction) of the cooling tube 200. That is, if any one surface (+X-axis direction) in the thickness direction (X-axis direction) of the cooling tube 200 is the cell attachment surface 207, the other surface (-X-axis direction) opposite to the one surface (+X-axis direction) may be the cell non-attachment surface 209.

The contact angle θ between the battery cells 100 and the cooling tube 200 may be provided at approximately 60 degrees or thereabouts. The reason for providing the contact angle θ around 60 degrees is that, if the contact angle θ is greater than 60 degrees, cooling performance may be improved, but there is a problem that the size of the entire battery pack 1 should be increased as the interval between the battery cells 100 increases. In addition, as the contact angle increases, the curvature of the cooling tube 200 is also increased inevitably, and if the contact angle θ is much greater than 60 degrees, it may cause a problem that the hydraulic pressure increases and the cooling flow may rather not be smooth. And, if the contact angle θ is smaller than 60 degrees, there is a problem that the cooling efficiency decreases as the cooling area of the battery cells 100 in contact with the cooling tubes 200 decreases.

Therefore, it is preferable that the contact angle θ is arranged within a range of approximately +/-1.5 degrees based on 60 degrees in consideration of this. For example, the contact angle θ may be provided in a range between 58.5 degrees and 61.5 degrees.

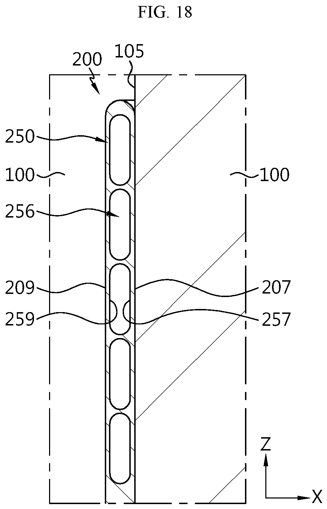

FIG. 17 is a schematic side cross-sectional view of a battery module for describing the arrangement of cooling tubes in the height direction of a battery module according to an embodiment of the present disclosure, and FIG. 18 is an enlarged view of part F of FIG. 17.

Referring to FIGS. 17 and 18, and the preceding FIGS. 15 and 16, in the battery module 10, the cooling tube 200 may ensure the cell attachment surface 207 as a flat surface according to the design of the cooling channel 250 described above, so that the adhesion between the cell attachment surface 207 and the outer surface 105 of the battery cells 100 may be increased and the shape of the internal flow path near the cell attachment surface 207 inside the cooling channel 250 may also be formed without bending, thereby securing heat transfer performance to the maximum extent.

Meanwhile, the outer surface 105 of the battery cell 100 and the cell attachment surface 207 of the cooling tube 200 may be tightly fixed to each other through an adhesive. The adhesive may be, for example, a resin adhesive. In addition, it may be possible to provide a heat transfer pad having a high adhesion between the outer surface 105 of the battery cell 100 and the cell attachment surface 207 of the cooling tube 200. Also, it may be possible to form an adhesion by filling a filling member made of a resin material between the outer surface 105 of the battery cell 100 and the cell attachment surface 207 of the cooling tube 200.

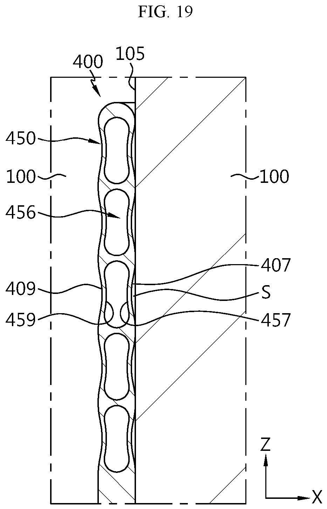

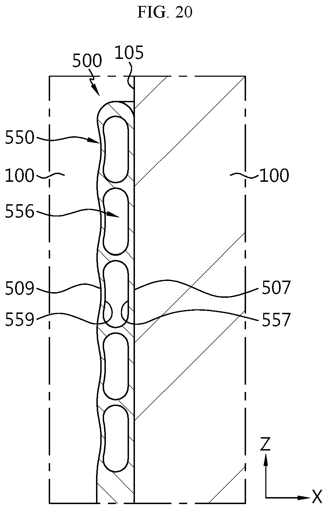

FIGS. 19 and 20 are views for describing a contact state between a cooling tube and a battery cell when cooling channels of the cooling tube according to an embodiment of the present disclosure are deformed.

Referring to FIG. 19, when the cooling tube 400 is deformed due to deformation of the cooling channel 450 of the cooling tube 400, a predetermined space S is created between the cell attachment surface 407 of the cooling tube 400 and the outer surface 105 of the battery cells 100. The predetermined space S may mean a non-contact space between the cooling tube 400 and the battery cell 100.

When this predetermined space S is created, the heat transfer performance of the cooling tube 400 is inevitably decreased by the reduced contact area. As seen previously, the predetermined space S may be caused by deformation of the cooling channel 450 during the press process of the cooling tube 400, in particular, deformation of the cooling channel 450 disposed near the cell attachment surface 407 of the cooling tube 400. In this way, the deformation of the cooling channel 450 disposed near the cell attachment surface 407 and the resulting deformation of the cell attachment surface 407 of the cooling tube 400 may cause a degradation in the cooling performance of the cooling tube 400.

Referring to FIG. 20, the cooling tube 500 according to this embodiment may be formed to secure a flat surface only on the cell attachment surface 507 and the inner surface 557 side close to the cell attachment surface 507, and to have a predetermined bending relatively on the cell non-attachment surface 509 and the inner surface 559 side relatively far from the cell attachment surface 507. In other words, in this embodiment, the cell attachment surface 507 and the inner surface 557 of the cooling channel 550 close thereto may have a flat surface, and the cell non-attachment surface 509 and the inner surface 559 of the cooling channel 550 close thereto may have a non-flat surface. That is, the cell non-attachment surface 509, which is provided on the opposite side of the cell attachment surface 507 of the cooling tube 500 and is not in contact with the outer surface 105 of the battery cells 100, may be provided as a non-flat surface having a greater deformation than the flat surface of the cell attachment surface 507.

As seen previously, the cell attachment surface 507 may be concavely pressed during the press process (see FIG. 5) and relatively compressed, resulting in less deformation, and the cell non-attachment surface 509 may be convexly pressed during the press process (see FIG. 5) and relatively stretched compared to the cell attachment surface 507, resulting in further deformation. In this embodiment, the cell attachment surface 507 that is in contact with the outer surface 105 of the battery cells 100 may be formed as a flat surface, and the cell non-attachment surface 509 that is not in contact with the outer surface 105 of the battery cells 100 may be formed as a non-flat surface having a greater deformation than the cell attachment surface 507, which is the flat surface.

The cell attachment surface 507 having the flat surface and the cell non-attachment surface 509 having the non-flat surface may be alternately formed along the longitudinal direction (Y-axis direction, see FIG. 15) of the cooling tube 500 based on one surface (+X-axis direction) or the other surface (-X-axis direction) of the cooling tube 500, and may be formed in a zigzag position along the longitudinal direction (Y-axis direction, see FIG. 15) of the cooling tube 500 based on both surfaces (X-axis direction) of the cooling tube 500. That is, in this embodiment, the flat surface and the non-flat surface may be alternately formed along the longitudinal direction (Y-axis direction, see FIG. 15) of the cooling tube 500 based on one surface (+X-axis direction) or the other surface (-X-axis direction) of the cooling tube 500, and may be formed in a zigzag position along the longitudinal direction (Y-axis direction, see FIG. 15) of the cooling tube 500 based on both surfaces (X-axis direction) of the cooling tube 500.

In the case of the cell non-attachment surface 509 provided as the non-flat surface, since it is not in contact with the battery cell 100, its flatness is relatively unimportant unlike the cell attachment surface 507, and thus, as in this embodiment, the cooling channel 550 may be designed by considering only the prevention of deformation of the cell attachment surface 507 and the cooling channel 550 near the cell attachment surface 507 to ensure flatness near the cell attachment surface 507. As such, in this embodiment, even if the cell non-attachment surface 509 that is not in contact with the battery cells 100 is formed as a non-flat surface, the cell attachment surface 507 in contact with the outer surface 105 of the battery cells 100 is formed as a flat surface, and thus contact performance between the battery cells 100 and the cooling tube 500 may be secured. Therefore, in this embodiment, the cooling tube 500 may be designed by considering only the flatness of the attachment surface with the battery cells 100 during the press process of the cooling tube 500, thereby securing relatively more design freedom of the cooling tube 500.

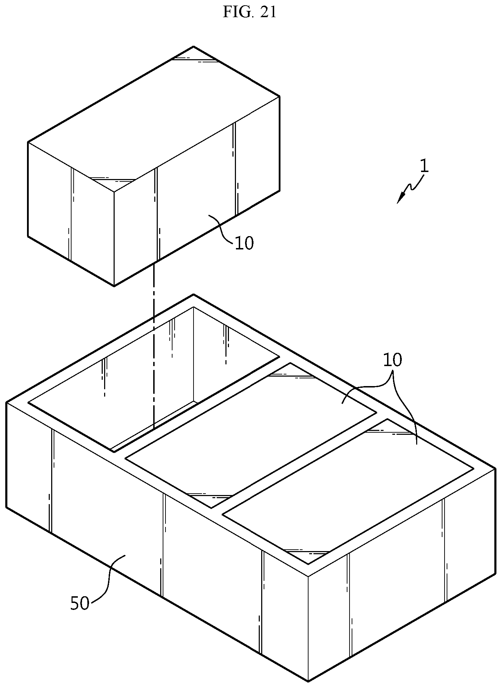

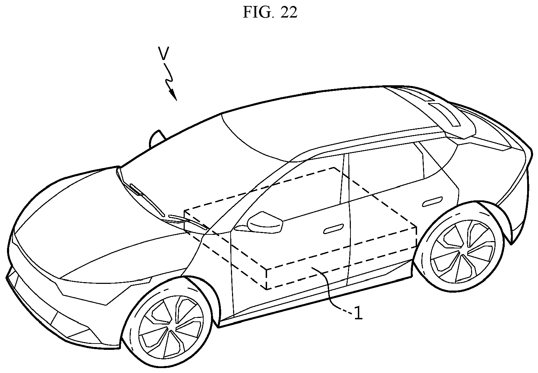

FIG. 21 is a view for describing a battery pack according to an embodiment of the present disclosure, and FIG. 22 is a view for describing a vehicle according to an embodiment of the present disclosure.

Referring to FIGS. 21 and 22, a battery pack 1 according to an embodiment of the present disclosure may include at least one battery module 10 according to the previous embodiment and a pack case 50 accommodating the battery module 10.

Such a battery pack 1 may further include an electrical component such as a BMS controlling the battery module 10 or a cooling unit such as a heat sink for cooling the battery module 10.

The battery pack 1 according to an embodiment of the present disclosure may further include various other components of the battery pack 1 known at the time of filing the present disclosure. For example, the battery pack 1 according to an embodiment of the present disclosure may further include components such as a current sensor, a fuse, and a service plug.

In addition, a vehicle V according to an embodiment of the present disclosure may include one or more battery packs 1 according to the present disclosure. And, the vehicle V according to an embodiment of the present disclosure may further include various other components included in the vehicle in addition to the battery pack 1. For example, in addition to the battery pack 1 according to an embodiment of the present disclosure, the vehicle V according to an embodiment of the present disclosure may further include a vehicle body, a motor, and a control device such as an electronic control unit (ECU).

In addition, it is of course possible that the battery pack 1 according to an embodiment of the present disclosure may be provided in other devices, instruments, and facilities, such as an energy storage system using secondary batteries, in addition to the vehicle V.

According to the various embodiments described above, it is possible to provide a battery module 10 having a cooling tube 200 that can secure heat transfer performance and minimize pressure loss, and a battery pack 1 and vehicle V including the same.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

## Claims

1. A battery module, comprising:
a plurality of battery cells; and
a cooling tube provided between the plurality of battery cells and having a cell attachment surface attached to the plurality of battery cells,
wherein a cooling channel through which a cooling medium for cooling the plurality of battery cells flows and which has a width of 1.7 mm to 1.8 mm in the stacking direction of the battery cells is formed inside the cooling tube.

2. The battery module according to claim 1,
wherein the cell attachment surface is provided as a flat surface and is in close contact with the outer surface of the plurality of battery cells.

3. The battery module according to claim 1,
wherein the cooling channel has a width of 1.76 mm in the stacking direction of the battery cells.

4. The battery module according to claim 1,
wherein the cooling tube is formed so that convex portions and concave portions are provided alternately by pressurizing during the manufacturing of the cooling tube, and
the cooling channel is provided in a preset plural number where no deformation of the flat surface occurs during the pressurizing.

5. The battery module according to claim 1,
wherein the cooling channel comprises:
an inlet channel that guides the cooling medium supplied from an external cooling device; and
an outlet channel that communicates with the inlet channel and guides the cooling medium flowing in the inlet channel to the external cooling device,
wherein the outlet channel is provided above the inlet channel in the height direction of the cooling tube.

6. The battery module according to claim 1,
wherein the cooling channels are provided with 10 channels and are disposed to be spaced apart from each other at a predetermined distance along the height direction of the cooling tube.

7. The battery module according to claim 5,
wherein the inlet channels and the outlet channels are provided with 5 channels each, and
each inlet channel and each outlet channel are disposed to be spaced apart at predetermined intervals in the height direction of the cooling tube.

8. The battery module according to claim 7,
wherein the predetermined interval is 0.3 mm to 0.9 mm in the height direction of the cooling tube.

9. The battery module according to claim 8,
wherein the predetermined interval is 0.34 mm in the height direction of the cooling tube.

10. The battery module according to claim 1,
wherein the cooling channel has a round end in the height direction of the cooling tube.

11. A battery pack, comprising:
at least one battery module according to any one of claims 1 to 10; and
a pack case accommodating the at least one battery module.

12. A vehicle, comprising at least one battery pack according to claim 11.
